# EUROPEAN PATENT SPECIFICATION

(11) **EP 0 919 124 B1**
(45) Date of publication and mention of the grant of the patent: **27.08.2003**
(21) Application number: 98204072.7
(22) Date of filing: 02.12.1998
(51) Int. Cl.: A01M 7/00, B60G 21/02

(54) **Spring-mounted spreading device**
Gefederte Streuvorrichtung
Dispositif d'épandage suspendu à des ressorts

(30) Priority: 02.12.1997 NL 1007675
(43) Date of publication of application: 02.06.1999
(73) Proprietor: Agrifac BV, 8332 JA Steenwijk (NL)
(72) Inventor: Blaauw, Doeko, 8332 JA Steenwijk (NL)
(74) Representative: 't Jong, Bastiaan Jacob

(56) References cited:
- BE-A- 829 989
- NL-C- 186 793
- US-A- 3 917 306

## Description

The invention relates to a spreading device for spreading material over a ground surface which comprises a mobile frame which carries at least one spreader boom directed transversely of the direction of travel.

Such a spreading device is known from the Netherlands patent 186 793.

In this known spreading device prevention means are present for holding the frame parallel to the momentary direction of travel. These prevention means prevent the spreader boom pivoting round a vertical transverse axis when the frame travels over uneven ground, which would result in an uneven spreading of the material.

The known device has the drawback that when there is considerable unevenness in the terrain an irregular spreading of the material can nevertheless still occur.

The invention now has for its object to further improve the known device.

This object is achieved in the spreading device according to the invention with the measures as characterized in claim 1. Shocks occurring during travel over uneven ground are hereby transmitted at the very most in attenuated form to the frame whereby the spreader boom is likewise safeguarded from severe jolting. This contributes to an even spreading of the material.

The shaft suspension ensures that no pivoting of the frame and the spreader boom occurs round a vertical axis during travel over uneven ground, so that the advantage of the prior art is preserved.

By applying the measure of claim 2 the shaft suspension can take a relatively simple form, in that it can act collectively for both pivot axes.

A suitable further embodiment is characterized in claim 3. The shaft suspension is hereby of simple construction and the relative longitudinal displacement of the frame relative to the sub-frames during compression and expansion of the spring-mounted means is negligible, only of course when the longitudinal support arm has sufficient length.

A very effective embodiment is characterized in claim 4. Owing to this construction the transverse shaft is held precisely parallel to the frame, wherein the shaft suspension substantially comprises only one moving part.

The spring-mounted means can engage at any desired location on the frame and the sub-frames, wheels or shaft suspension. The measure of claim 5 is however preferably applied. The pitch stiffness of the spring system hereby becomes maximal. This contributes to a uniform displacement of the device over the ground surface, which of course enhances uniform spreading of the material.

The spring-mounted means are preferably height-adjustable so that they can urge the pivot axis into the vertical middle position relative to the frame, irrespective of the loading state of the spreading device. Usual spreading devices are for instance provided with a liquid tank of considerable volume, so that there is a marked difference between the mass of the frame with tank carried thereby in empty and full state.

In suitable manner the springs can be air springs. Since a spreading device of the present type is usually already provided with a compressed air supply, the desired height adjustability can be realized in simple manner.

The invention will be further elucidated in the following description with reference to the annexed figures.
- Figure 1: shows a partly perspective view of s spreading device according to the present invention.

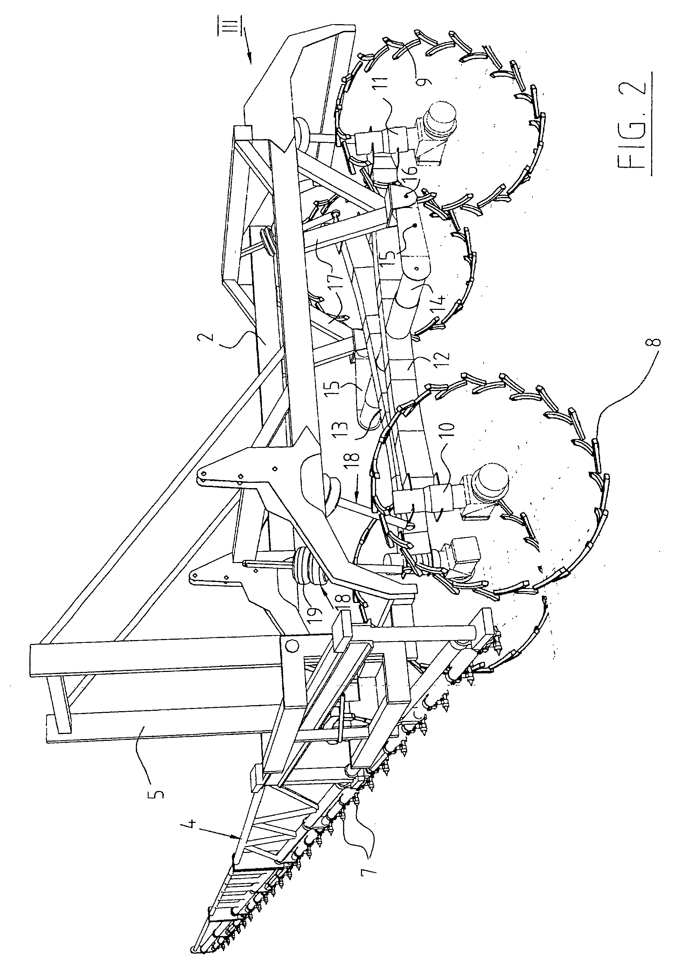

- Figure 2: shows a perspective view obliquely from the rear of the device of figure 1, wherein parts not relevant to the invention are omitted.
- Figure 3: shows a perspective view as according to arrow III of figure 2.
- Figure 4: shows a view corresponding with figure 3 wherein the device stands on flat ground.

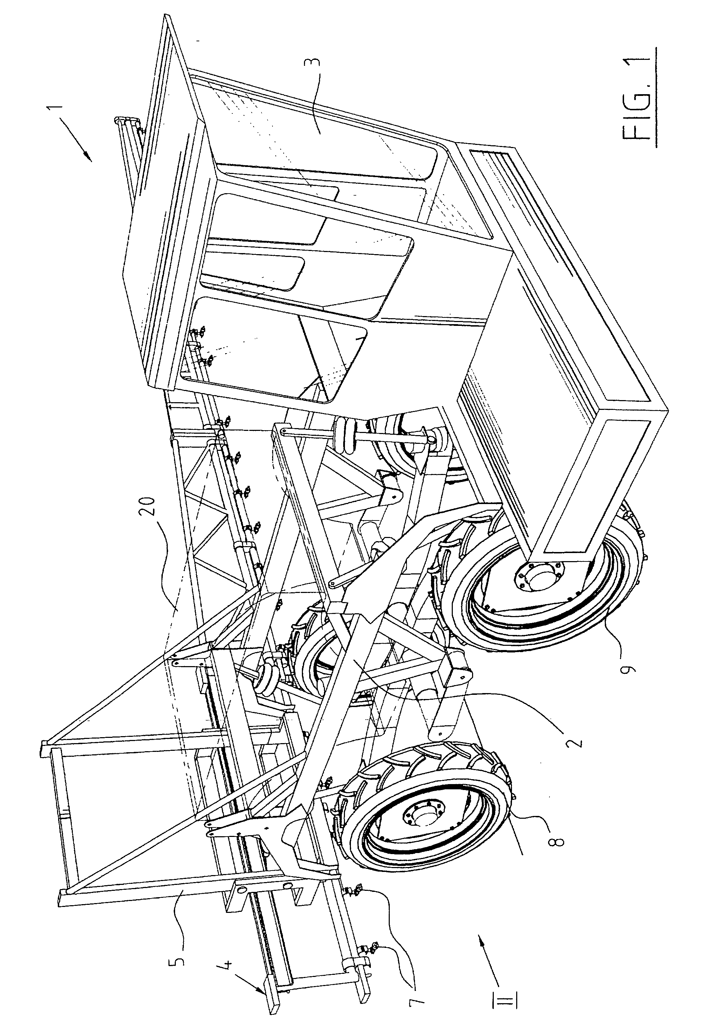

The spreading device shown in figure 1 is provided with wheels and comprises a frame 2, on the front side of which is arranged a driver's cab 3. At the rear, on the left in the figure, the device carries a spreader boom 4 which can extend transversely of the direction of travel over a considerable width. Spreader boom 4 is provided with spray nozzles 7 through which in this embodiment a liquid can be sprayed onto a crop growing on the ground surface.

The liquid is carried with the device 1 in a tank 20 designated schematically in figure 1.

Spray boom 4 is generally mounted on a spreader boom support 5 for pivoting on the longitudinal axis of the vehicle, i.e. the direction of travel. In this embodiment this is realized by a guide track 6 which extends concentrically of the longitudinal pivot axis of spray boom 4.

Arranged between spray boom 4 and frame 2 of the device is a control mechanism which ensures that spray boom 4 is continuously held parallel to the ground surface. This mechanism is not further described here since it does not form part of the invention.

As the figures show, a front wheel 9 and rear wheel 8 are situated on each side of frame 2. Wheels 8 and 9 on one side are mounted in each case on a sub-frame 12, 13 by means of kingpin constructions 10 respectively 11. Wheels 8 and 9 can be steered using these kingpin constructions 10, 11.

Sub-frame 12 connects the front and rear wheels 9, 8 on one side rigidly to each other.

At a location halfway between the ends of sub-frames 12, 13 each sub-frame is mounted in this embodiment for pivoting round a horizontal pivot axis which is defined by a transverse shaft 14 and which extends transversely of the direction of travel. Transverse shaft 14 bears on either end longitudinal support arms 15 which are fixedly connected thereto and pivotally connected at 16 to supports 17 of frame 2.

By means of this connection of transverse shaft 14 by means of longitudinal support arms 15 the transverse shaft 14 can displace parallel to itself upward and downward relative to the frame 2.

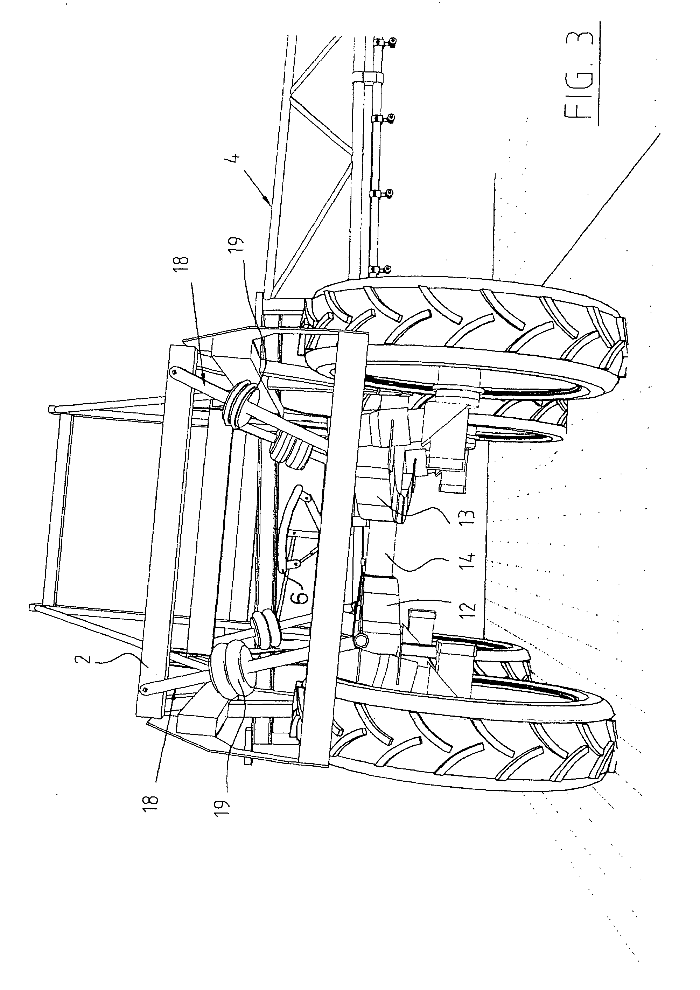

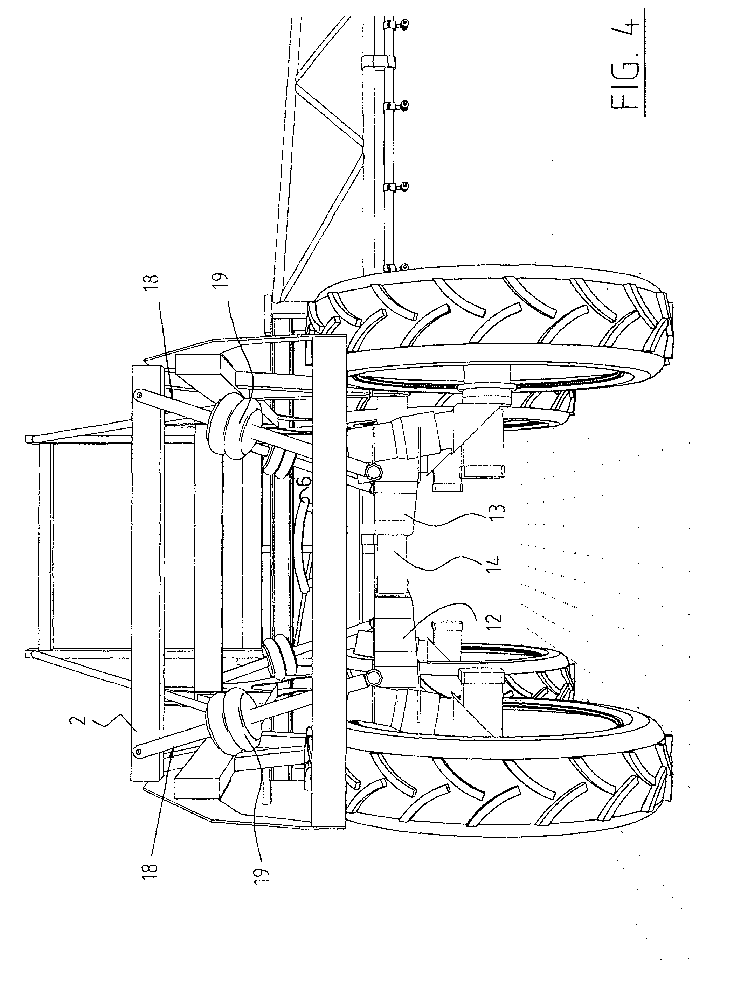

Since sub-frames 12, 13 are only pivotal round transverse shaft 14, no angular displacement of sub-frames 12, 13 relative to frame 2 will occur in longitudinal direction during a relative upward or downward movement of the wheels. This is shown clearly in a comparison of figures 3 and 4. In the situation of figure 3 the left rear wheel of device 1 is standing in a hole. Sub-frame 13 is hereby pivoted through a small angle on transverse shaft 14, whereby the bearing mounting round transverse shaft 14 of this sub-frame 13 is moved slightly downwards. Sub-frame 12 is not however moved downwards, so that shaft 14 lies at a slant as shown in figure 3.

Owing to the shaft suspension formed by the assembly of transverse shaft 14, longitudinal support arms 15 and the hinged connection thereof at the location 16 to supports 17 of frame 2, the frame 2 also assumes the slanting position of transverse shaft 14. Frame 2 hereby remains parallel to the direction of travel and no pivoting of spreader boom 4 on a vertical axis occurs.

As discussed above, spreader boom 4 is otherwise held parallel to the ground by said control mechanism.

Thus, when the device travels through a hole or over a bump, spreader boom 4 therefore displaces parallel to itself, whereby a uniform distribution of the material over the ground surface or the crop thereon takes place.

Arranged between frame 2 and the outer ends of sub-frames 12, 13 are spring-mounted means which in this case comprise air spring bellows 18. The pressure in spring bellows 18 can be controlled by a compressed air unit which is not shown but which is present on the spreading device such that the pivot axis defined by transverse shaft 14 is urged into a vertical middle position relative to the frame. In other words, the pivot axis can move both upward and downward in vertical direction relative to this middle position.

In the preferred embodiment shown here the longitudinal support arms 15 lie horizontally in the middle position, so that during the relative vertical movement of transverse shaft 14 relative to frame 2 only a minimal and negligible relative movement occurs in longitudinal direction.

The figures show only one advantageous embodiment of the invention. Many embodiment variants are possible. Sub-frames 12, 13 can thus each be connected individually to frame 2 by a suitable shaft suspension and the spring-mounted means 18 can for instance be integrated into transverse shaft 14 in the form of a torsion spring system. However, by arranging spring-mounted elements 18 on the ends of sub-frames 12, 13 a maximum pitch stiffness is obtained, i.e. a minimum sensitivity to swivelling movements of the frame on a horizontal transverse axis.

An additional advantage of the invention is that owing to the smoother movements of frame 2 in the case of unevenness in the ground surface it is possible to drive at a higher speed without the quality of the spreading being adversely affected. In addition, the advantage of the invention is that the driver in cab 3 is more comfortable, whereby the work is less tiring.

## Claims

1. Spreading device for spreading material over a ground surface, comprising a mobile frame (2), at least one spreader boom (4) supported by the frame and directed transversely of the direction of travel, a sub-frame (12, 13) on either side of the frame (2) on which are mounted a front wheel (9) and rear wheel (8) disposed on the relevant side, which sub frames (12, 13) are each pivotable on a horizontal pivot shaft (14), **characterised in that** the pivot shaft is connected to the frame (2) by a shaft suspension (15, 16, 17) for vertical displacement parallel to itself and wherein spring-mounted means (18) are arranged which urge the pivot shaft (14) into a vertical middle position relative to the frame (2).

2. Spreading device as claimed in claim 1, wherein the pivot shafts (14) of both sub-frames (12, 13) are coaxial.

3. Spreading device as claimed in claim 2, wherein the pivot shafts (14) are defined by a transverse shaft (14) on which the sub-frames (12, 13) are mounted and the shaft suspension (15, 16, 17) comprises at least one longitudinal support arm (15) on the transverse shaft (14), which arm (15) is connected with a protruding end to the frame (2) for pivoting on a shaft parallel to the pivot shaft and wherein the longitudinal support arm (15) extends horizontally in the vertical middle position of the pivot shaft (14).

4. Spreading device as claimed in claim 3, wherein the transverse shaft (14) protrudes at both ends outside the sub-frames (12, 13) and a longitudinal support arm (15) is fixedly connected thereto at each end.

5. Spreading device as claimed in any of the foregoing claims, wherein the spring-mounted means (18) comprise a number of springs arranged between each end of the sub-frames (12, 13) and the frame (2).

6. Spreading device as claimed in any of the foregoing claims, wherein the spring-mounted means (18) are height-adjustable.

7. Spreading device as claimed in claim 6, wherein the springs are air springs (19).

## Patentansprüche

1. Sprühvorrichtung zum Versprühen von Material über eine Bodenfläche, aufweisend einen mobilen Rahmen (2), zumindest einen Sprühausleger (4), der von dem Rahmen getragen wird und quer zur Fahrtrichtung ausgerichtet ist, einen Hilfsrahmen (12, 13) an jeder Seite des Rahmens (2), an welchem ein Vorderrad (9) und ein Hinterrad (8) montiert sind, die an der relevanten Seite angeordnet sind, welche Hilfsrahmen (12, 13) jeweils um eine horizontale Schwenkwelle (14) schwenkbar sind, **dadurch gekennzeichnet, dass** die Schwenkwelle mit dem Rahmen (2) über eine Wellenaufhängung (15, 16, 17) zur vertikalen Verschiebung parallel zu dieser verbunden ist, und wobei Federmittel (18) angeordnet sind, welche die Schwenkwelle (14) in eine vertikale Mittelposition relativ zu dem Rahmen (2) vorspannen.

2. Sprühvorrichtung nach Anspruch 1, wobei die Schwenkwellen (14) beider Hilfsrahmen (12, 13) koaxial zueinander sind.

3. Sprühvorrichtung nach Anspruch 2, wobei die Schwenkwellen (14) durch eine Querwelle (14) definiert sind, an welcher die Hilfsrahmen (12, 13) montiert sind, und die Wellenaufhängung (15, 16, 17) zumindest einen Längsstützarm (15) an der Querwelle (14) aufweist, welcher Arm (15) mit einem vorstehenden Ende mit dem Rahmen (2) zum Schwenken um eine Achse parallel zu der Schwenkwelle verbunden ist, und wobei sich der Längsstützarm (15) horizontal in der vertikalen Mittelposition der Schwenkwelle (14) erstreckt.

4. Sprühvorrichtung nach Anspruch 3, wobei die Querwelle (14) mit beiden Enden an der Außenseite der Hilfsrahmen (12, 13) vorsteht und ein Längsstützarm (15) fest damit an jedem Ende verbunden ist.

5. Sprühvorrichtung nach einem der vorhergehenden Ansprüche, wobei die Federmittel (18) eine Anzahl von Federn aufweisen, die zwischen jedem Ende der Hilfsrahmen (12, 13) und dem Rahmen (2) angeordnet sind.

6. Sprühvorrichtung nach einem der vorhergehenden Ansprüche, wobei die Federmittel (18) höhenverstellbar sind.

7. Sprühvorrichtung nach Anspruch 6, wobei die Federn Luftfedern (19) sind.

## Revendications

1. Dispositif d'épandage pour épandre un matériau sur une surface de terre-plein, comprenant un châssis mobile (2), au moins une rampe d'épandage (4) supportée par le châssis et dirigée de manière transversale par rapport au sens de déplacement, un sous-châssis (12, 13) de chaque côté du châssis sur lequel sont montées une roue avant (9) et une roue arrière (8) disposées sur le côté approprié, lesquels sous-châssis (12, 13) peuvent pivoter chacun sur un arbre de pivotement horizontal (14), **caractérisé en ce que** l'arbre de pivotement est relié au châssis (2) par une suspension d'arbre (15, 16, 17) pour assurer le déplacement vertical parallèle à lui-même et selon lequel des moyens montés sur ressort (18) sont disposés qui poussent en force l'arbre de pivotement (14) dans une position médiane verticale par rapport au châssis (2).

2. Dispositif d'épandage selon la revendication 1, selon lequel les arbres de pivotement (14) des deux sous-châssis (12, 13) sont coaxiaux.

3. Dispositif d'épandage selon la revendication 2, selon lequel les arbres de pivotement (14) sont définis par un arbre transversal (14) sur lequel les sous-châssis (12, 13) sont montés et la suspension de l'arbre (15, 16, 17) comprend au moins un bras de support longitudinal (15) sur l'arbre transversal (14), lequel bras (15) est relié par une extrémité débordante au châssis (2) pour pivoter sur un arbre parallèle à l'arbre de pivotement, et selon lequel le bras de support longitudinal (15) s'étend dans le sens horizontal dans la position médiane verticale de l'arbre de pivotement (14).

4. Dispositif d'épandage selon la revendication 3, selon lequel le bras transversal (14) fait saillie au niveau des deux extrémités à l'extérieur des sous-châssis (12, 13) et un bras de support longitudinal (15) est relié de manière fixe à ce dernier, au niveau de chaque extrémité.

5. Dispositif d'épandage selon l'une quelconque des revendications précédentes, selon lequel les moyens montés sur ressort (18) comprennent un certain nombre de ressorts disposés entre chaque extrémité des sous-châssis (12, 13) et le châssis (2).

6. Dispositif d'épandage selon l'une quelconque des revendications précédentes, selon lequel les moyens montés sur ressort (18) sont réglables en hauteur.

7. Dispositif d'épandage selon la revendication 6, selon lequel les ressorts sont des ressorts pneumatiques (19).
